# EUROPÄISCHE PATENTSCHRIFT

(11) **EP 3 554 752 B1**
(45) Veröffentlichungstag und Bekanntmachung des Hinweises auf die Patenterteilung: **16.12.2020**
(21) Anmeldenummer: 17787298.3
(22) Anmeldetag: 04.10.2017
(51) Int. Cl.: B23K 11/00

(54) **GITTERSCHWEISSMASCHINE**
GRID WELDING MACHINE
SOUDEUSE DE TREILLIS

(30) Priorität: 14.12.2016 AT 5662016
(43) Veröffentlichungstag der Anmeldung: 23.10.2019
(73) Patentinhaber: EVG Entwicklungs- u. Verwertungs- Gesellschaft m.b.H., 8074 Raaba (AT)
(72) Erfinder: TREMMEL, Robert, 8042 Graz (AT); DROSCHL, Georg, 8442 Kitzeck (AT); RITTER, Klaus, 8042 Graz (AT)
(74) Vertreter: Fox, Tobias
(86) Internationale Anmeldenummer: PCT/AT2017/000070
(87) Internationale Veröffentlichungsnummer: WO 2018/107188

(56) Entgegenhaltungen:
- EP-A1- 0 150 704
- AT-B- 357 005
- AT-B1- 515 914
- DE-A1- 2 032 922
- FR-A- 1 193 844
- US-A- 3 961 153

## Beschreibung

Die Erfindung betrifft eine nach der elektrischen Widerstandsmethode kontinuierlich arbeitende Gitterschweißmaschine, mit einem stationären Längsrahmen, auf welchem aufliegend eine horizontale Schar paralleler Längsdrähte mittels einer Vorschubeinrichtung kontinuierlich in Produktionsrichtung bewegbar ist, sowie mit einer Abziehvorrichtung, mittels welcher die Querdrähte von einer Spule abziehbar und einer quer zur Schar der Längsdrähte über bzw. unter dieser verlaufenden Übergabeeinrichtung zuführbar sind, in welcher mehrere Querdrähte aufnehmbar und von dort hintereinander der Reihe nach an die Längsdrähte heranführbar und an diesen der Teilung der Querdrähte entsprechend und lagegerecht in Anlage bringbar und dort abgebbar sind, sowie mit Elektroden und Gegenelektroden, deren Schweißflächen unter Zwischenanordnung der zwischen den Längsdrähten und den Querdrähten gebildeten Kreuzungsstellen gegeneinander preßbar sind, wobei sowohl die oberen Elektroden als auch die unteren Gegenelektroden an einem am stationären Rahmen gelagerten und gegenüber diesem periodisch in der Längsrichtung horizontal hin- und herverfahrbaren inneren Rahmen angeordnet sind und die oberen Elektroden an dem verfahrbaren Rahmen von einer oberen Stellung nach unten auf die auf den unteren Gegenelektroden aufliegenden Kreuzungsstellen hin bewegbar gelagert sind, wobei sie in Anlage an den Kreuzungsstellen eine untere erste Stellung des beginnenden Schweißens erreichen und dann durch Verfahren des Rahmens in der Längsrichtung gemeinsam mit den unteren Gegenelektroden bei aufrechterhaltenem Anpreßdruck synchron mit dem Gitter bis in eine zweite auf demselben Höhenniveau liegende, in Flußrichtung hintere Stellung des endenden Schweißens mitfahren und dann durch Zurückfahren des inneren Rahmens die Elektroden und die Gegenelektroden wieder ihre frühere Lage in bezug auf die Längsrichtung erreichen, während die oberen Elektroden zuerst wieder lotrecht nach oben und schließlich nach unten in die frühere untere erste Stellung des beginnenden Schweißens am bzw. an den darauffolgenden Querdrähten bewegbar sind, wobei die Querdrähte an die Schar der Längsdrähte mittels Greiffingern lagerecht in Anlage bringbar sind (siehe die FR-A-1193844).

In der Praxis werden vorwiegend Gitterschweißmaschinen eingesetzt, bei welchen die horizontale Schar der Längsdrähte intermittierend bewegt wird, um das Verschweißen der Längsdrähte an stillstehenden Kreuzungsstellen des Gitters mit seitlich herangeführten Querdrähten in den Bewegungspausen zu ermöglichen. Nachteilig ist hierbei, daß das gesamte Gitter und die gesamte für dessen Bewegung erforderliche Vorrichtung für jede der Schweißphasen abgebremst und wieder beschleunigt werden müssen, was viel Lärm und einen sehr hohen Energieverbrauch verursacht.

Zur Vermeidung dieser Nachteile ist bereits ein kontinuierlich arbeitendes Schweißverfahren mit der Patentschrift AT-B-357 005 der Anmelderin vorgeschlagen worden. Hierbei wird die Schar der Längsdrähte kontinuierlich mit konstanter Geschwindigkeit in der Längsrichtung bewegt und werden die Querdrähte oberhalb der bewegten Schar der Reihe nach hintereinander an die Längsdrähte herangeführt und an diesen der Teilung der Querdrähte entsprechend und lagegerecht in Anlage gebracht und an den Kreuzungsstellen des Gitters mittels Elektroden und Gegenelektroden nach der elektrischen Widerstandsmethode mit den Querdrähten verschweißt; dabei werden die unteren Elektroden gegen die oberen Gegenelektroden unter Zwischenanordnung der Kreuzungsstellen gepreßt. Die Elektroden und Gegenelektroden sind als Rollen ausgebildet, die an quer zur Längsrichtung angeordneten Achsen drehbar gelagert sind und unter Zwischenanordnung der Kreuzungsstellen der durchlaufenden Längs- und Querdrähte aneinander ablaufen; sie berühren einander nur punktuell an den jeweiligen Kreuzungsstellen. Die Dauer der Schweißvorgänge ist auf die kurze Zeitspanne der punktuellen Berührung der sich drehenden Rollen beschränkt, so daß diese Zeitspanne nur bei sehr langsamem Durchlauf des Gitters für das vollständige Verschweißen an den Kreuzungsstellen ausreicht. Gitter aus dickeren Drähten können aus demselben Grund mit diesem Verfahren überhaupt nicht hergestellt werden.

Ähnliches gilt für das aus der Patentschrift AT-B-346 668 der Anmelderin bekannte Verfahren zum Herstellen einer Gitterbahn aus einander kreuzenden Drahtscharen, die jeweils zickzackförmig zur Bahnlängsrichtung verlaufen. Hierbei durchlaufen die Drahtscharen kontinuierlich einen Schweißbereich mit mitbewegten Elektroden. Auch hierbei sind nur geringe Produktionsgeschwindigkeiten und/oder Drahtdurchmesser aufgrund der kurzen für das Schweißen zur Verfügung stehenden Zeitspanne möglich.

Der Erfindung liegt die Aufgabe zugrunde, die genannten schwerwiegenden Nachteile der bekannten kontinuierlich arbeitenden Gitterschweißmaschinen zu beseitigen. Die Erfindung geht aus von einem Verfahren zum Herstellen von längsgestreckten Drahtgittern aus einer horizontalen Schar paralleler Längsdrähte, die mit hierzu in einem rechten Winkel verlaufenden Querdrähten an den Kreuzungsstellender Längs- und der Querdrähte verschweißt sind, wie beschrieben in der eingangs erwähnten AT-B-357 005. Hierbei wird die Schar der Längsdrähte kontinuierlich mit konstanter Geschwindigkeit in der Längsrichtung bewegt und werden die Querdrähte oberhalb und gegebenenfalls auch unterhalb der bewegten Schar der Reihe nach hintereinander an die Längsdrähte herangeführt und an diesen der Teilung der Querdrähte entsprechend und lagegerecht in Anlage gebracht und an den Kreuzungsstellen des Gitters mittels Elektroden und Gegenelektroden nach der elektrischen Widerstandsmethode mit den Querdrähten verschweißt, während die Elektroden und die Gegenelektroden mit ihren Schweißflächen unter Zwischenanordnung der Kreuzungsstellen gegeneinander gepreßt sind. Die Erfindung setzt bei einem derartigen Verfahren die weiteren Schritte um, daß die oberen Elektroden von einer oberen Stellung nach unten auf die auf den unteren Gegenelektroden aufliegend zu bildenden Kreuzungsstellen hinbewegt werden, bis sie unmittelbar nach dem Auflegen des jeweiligen Querdrahtes bzw. der beiden jeweiligen Querdrähte auf die Längsdrähte eine erste Stellung des beginnenden Schweißens erreichen und dann gemeinsam mit den unteren Gegenelektroden bei aufrechterhaltenem, konstantem oder unter Umständen variierendem Anpreßdruck mit dem Gitter synchron in Längsrichtung mitfahren, wobei während der Vorwärtsbewegung die Schweißung in der erforderlichen Zeitdauer durchgeführt wird, worauf die Elektroden und Gegenelektroden gemeinsam in ihre frühere Stellung in bezug auf die Längsrichtung zurückfahren, während die oberen Elektroden wieder in ihre obere Stellung zurück und schließlich nach unten wieder in die Stellung des beginnenden Schweißens in Anlage an den Kreuzungsstellen des bzw. der beiden nachfolgenden Querdrähte bewegt werden.

Die erfindungsgemäße nach der elektrischen Widerstandsmethode arbeitende Gitterschweißmaschine geht aus von der bekannten Schweißmaschine, wie sie in der eingangs erwähnten AT-B-357 005 beschrieben ist: Die bekannte Maschine hat einen stationären Maschinenrahmen, auf welchem aufliegend eine horizontale Schar paralleler Längsdrähte mittels einer Vorschubeinrichtung kontinuierlich in Produktionsrichtung bewegbar ist, sowie eine Abziehvorrichtung, mittels welcher die Querdrähte von einer Spule abziehbar und einer quer zur Schar der Längsdrähte über bzw. unter dieser verlaufenden Übergabeeinrichtung zuführbar sind, in welcher mehrere Querdrähte aufnehmbar und von dort hintereinander der Reihe nach an die Längsdrähte heranführbar und an diesen der Teilung der Querdrähte entsprechend und lagegerecht in Anlage bringbar und dort abgebbar sind; außerdem sind an der Maschine Elektroden und Gegenelektroden vorgesehen, deren Schweißflächen unter Zwischenanordnung der zwischen den Längsdrähten und den Querdrähten gebildeten Kreuzungsstellen gegeneinander preßbar sind. Ferner ist vorgesehen, daß sowohl die oberen Elektroden als auch die unteren Gegenelektroden an einem im äußeren Längsrahmen gelagerten und gegenüber diesem periodisch in der Längsrichtung horizontal hin- und herverfahrbaren inneren Rahmen angeordnet sind und die oberen Elektroden von einer oberen Stellung nach unten auf die auf den unteren Gegenelektroden aufliegenden Kreuzungsstellen hin bewegbar gelagert sind, wobei sie in Anlage an den Kreuzungsstellen eine untere erste Stellung des beginnenden Schweißens erreichen und dann durch Verfahren des Rahmens in der Längsrichtung gemeinsam mit den unteren Gegenelektroden bei aufrechterhaltenem Anpreßdruck synchron mit dem Gitter bis in eine zweite auf demselben Höhenniveau liegende Stellung des endenden Schweißens mitfahren und dann durch Zurückfahren des Rahmens die Elektroden und die Gegenelektroden wieder ihre frühere Lage in bezug auf die Längsrichtung erreichen, während die oberen Elektroden zuerst wieder nach oben und schließlich in die frühere untere erste Stellung des beginnenden Schweißens am bzw. an den darauf folgenden Querdrähten bewegbar sind, wobei die Querdrähte an die Schar der Längsdrähte mittels Greiffingern lagerecht in Anlage bringbar sind.

Die Erfindung sieht ausgehend von diesem Stand der Technik vor, daß die für jede der Schweißstellen vorgesehenen Greiffinger an die mehrere von der Abziehvorrichtung angekommenen Querdrähte aufnehmende Übergabeeinrichtung zur Aufnahme der Querdrähte fahrbar und dann mitsamt einem aufgenommenen Querdraht an die Kreuzungsstellen heranfahrbar sind, bis der Querdraht zu einem Zeitpunkt unmittelbar vor den oberen Elektroden auf die Kreuzungsstellen auftrifft und die Greiffinger dann mittels des verfahrbaren Rahmens zuerst allein vor Beginn des Schweißens ein erstes Teilstück und dann gemeinsam mit den Elektroden und Gegenelektroden ein weiteres Teilstück des von ihnen synchron mit den Längsdrähten des zu bildenden Gitters gefahrenen horizontalen Weges fahren, worauf das synchrone Fahren der Elektroden und Gegenelektroden bis zum fertigen Schweißen fortsetzbar ist.

Weitere, bevorzugte Merkmale der Erfindung finden sich in den abhängigen Ansprüchen.

Vorteile der Erfindung sind im Vergleich zu intermittierend arbeitenden Schweißmaschinen, die bisher vorwiegend eingesetzt wurden der wesentlich geringere Energiebedarf, die möglichen hohen Produktionsgeschwindigkeiten sowie die wesentlich geringere Lärmbelastung aufgrund des Entfalls des vielfachen Abbremsens und Beschleunigens der hergestellten Gitterbahn und der für deren Bewegen erforderlichen Vorrichtungen außerordentlich vorteilhaft.

Die Erfindung wird anhand eines in der Zeichnung dargestellten Ausführungsbeispiels einer erfindungsgemäßen Gitterschweißmaschine näher erläutert; darin ist
Fig. 1 eine schematische Gesamtdarstellung der Maschine in einer Seitenansicht,
Fig. 2 eine Stirnansicht dieser Maschine,
Fig. 3 zeigt den zentralen Teil der Maschine nach Fig. 1 und 2 in einer Seitenansicht;
die Fig. 4 - 6 sind Arbeitsdiagramme der Maschine bei verschiedenen Produktionsgeschwindigkeiten, welche die Zeit des Einsatzes verschiedener Komponenten der Maschine zeigen und das Verfahren veranschaulichen.

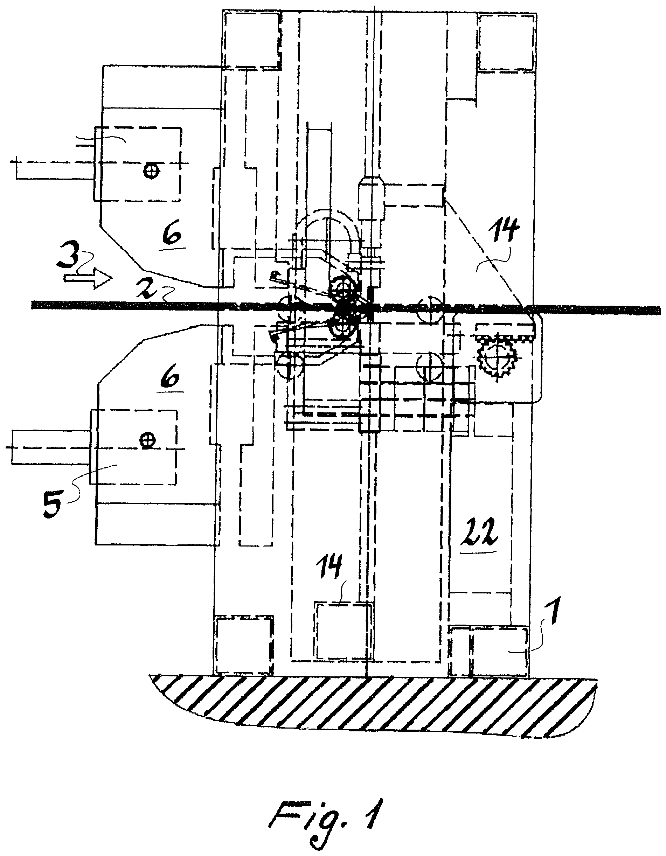

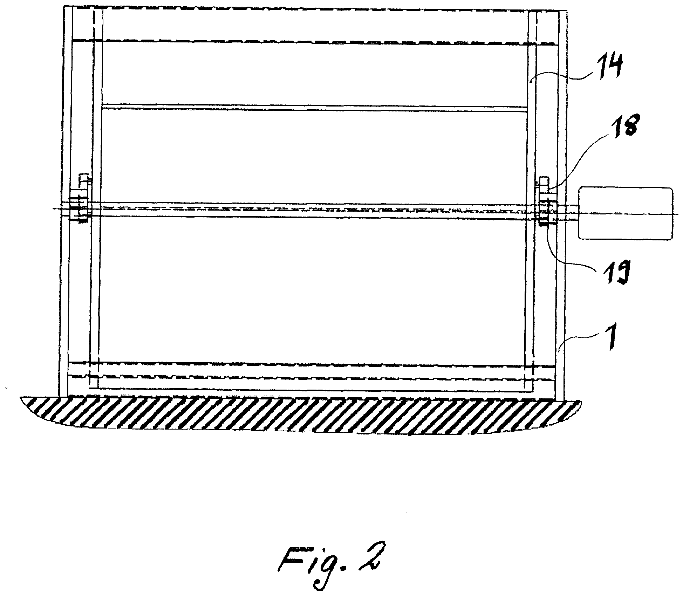

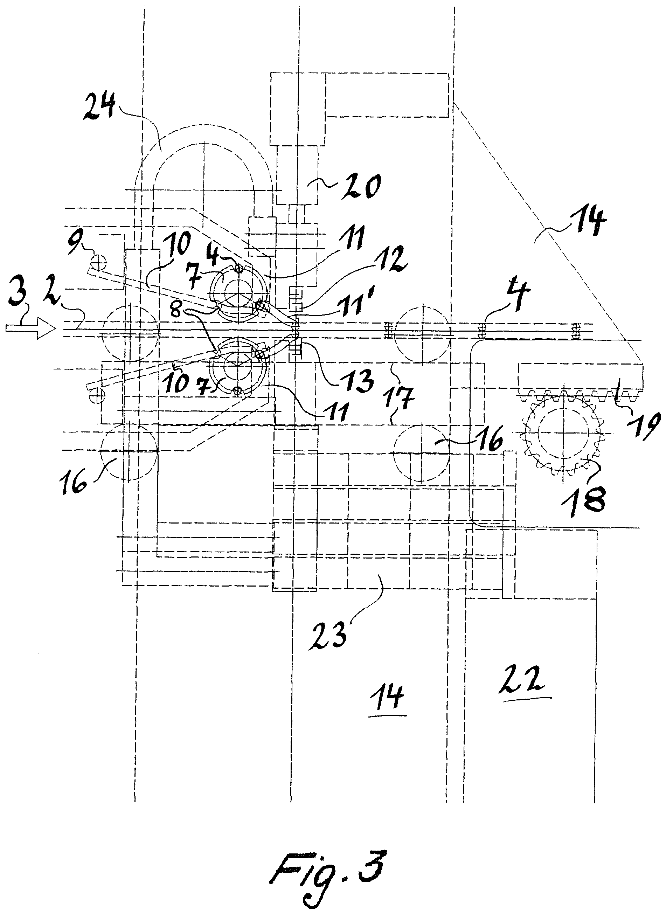

Wie die Fig. 1 - 3 zeigen, hat die Gitterschweißmaschine einen stationären äußeren Rahmen 1 mit einer horizontalen Arbeitsebene 2 (in Fig. 1 dick gezeichnet), auf welcher eine Schar nicht dargestellter horizontaler paralleler Längsdrähte mittels einer nicht dargestellten Vorschubeinrichtung, z.B. in Form von Rollen oder Walzen, in Produktionsrichtung 3 bewegt wird. Im Gegensatz zu den vorwiegend in der Praxis eingesetzten Gitterschweißmaschinen, bei welchen die horizontale Schar der Längsdrähte intermittierend bewegt wird, um das Verschweißen der Längsdrähte an stillstehenden Kreuzungsstellen des Gitters mit seitlich herangeführten Querdrähten in den Bewegungspausen zu ermöglichen, wird die Schar der Längsdrähte kontinuierlich mit gleichbleibender Geschwindigkeit in der Produktionsrichtung bewegt.

Die Querdrähte 4 können entweder nur von oben oder unten oder beidseitig an die Schar der Längsdrähte herangeführt und so Gitter mit der Lage von Querdrähten oberhalb oder unterhalb der Längsdrähte hergestellt werden. Für die Zufuhr der Querdrähte 4 wird jeweils von einer Spule 5 der aufgewickelte Draht mittels einer Abzieheinrichtung 6 abgezogen, auf die erforderliche Länge der Querdrähte 4 geschnitten und werden diese einer Übergabeeinrichtung zugeführt, die mehrere Querdrähte 4 aufnehmen kann. Die Übergabeeinrichtungen sind als quer zur Schar der Längsdrähte über bzw. unter dieser Schar angeordnete Trommeln 7 ausgebildet, von welchen eine Trommel 7 oberhalb der Schar von Längsdrähten und eine Trommel 7 unterhalb dieser Schar am stationären äußeren Rahmen 1 mitsamt einem jeweiligen Drehantrieb gelagert ist. Möglich ist auch ein gemeinsamer Drehantrieb für die obere 7 und die untere Trommel 7, der bei Bedarf von einer der Trommeln 7 getrennt werden kann und dann nur die andere Trommel 7 beaufschlagt. Die Trommeln 7 weisen an ihrer Oberfläche in ihrer Längsrichtung verlaufende Rillen 8 auf, die nach außen offen stehen. Jede Trommel 6 hat mindestens drei um ihren Umfang gleichmäßig verteilte Rillen 8, von welchen im Betrieb mindestens zwei je einen Querdraht 4 aufnehmen. Die Trommeln 7 sind intermittierend drehbar; in den Drehpausen schiebt eine hier nicht näher beschriebene Einschußeinrichtung einen Querdraht 4 von der Seite her über seine ganze Maschinenbreite hinein in eine an der Oberseite bzw. Unterseite der Trommel 7 befindliche Rille 8, worauf der Querdraht 4 in seiner endgültigen Position ober- bzw. unterhalb der Schar der Längsdrähte am Ende der Rille 8 abgebremst wird; eine derartige Trommel 7 mitsamt der nötigen Bremseinrichtung für die in die Rillen 8 eingeschossenen Querdrähte 4 ist beschrieben in der veröffentlichten EP-A-1 579 932 der Anmelderin, so daß hier nicht näher darauf eingegangen zu werden braucht; um das Herausfallen der Querdrähte 4 während des Weiterdrehens der Trommel 7 zu verhindern, wird der Querdraht 4 mittels einer bei 9 am ortsfesten äußeren Rahmen 1 angelenkten Klappe 10 gehalten; gleichzeitig mit dem Einschieben des erwähnten Querdrahtes 4 in die Rille 8 wird aus einer vorher mit dem vorhergehenden Querdraht 4 beschickten Rille 8 der Trommel 7 der dort nach einem Drehschritt befindliche Querdraht 4 abgegriffen.

Das Abgreifen erfolgt unter Öffnen der Klappe 10 mittels einer Reihe synchron bewegter Greiffinger 11, die den Querdraht 4 darauffolgend unter Aufrechterhaltung von dessen horizontaler Querlage durch Bewegen hin zur Arbeitsebene 2 und in der Produktionsrichtung 3 in die endgültige Schweißposition bringen. Die Ausbildung der Greiffinger 11 wird weiter unten erläutert. Die Reihe der Greiffinger 11 bewegt den abgegriffenen Querdraht 4 dabei wie folgt: Zuerst wird der jeweilige Querdraht 4 entlang eines Teilstücks einer etwa elliptischen Kurvenbahn 11' in der Produktionsrichtung 3 nach vorne und unten bzw. oben in Anlage gegen die bewegte Schar der Längsdrähte gebracht. Hierauf fahren die Greiffinger 11 entlang einer kurzen geraden Strecke mit den Längsdrähten und dem zu verschweißenden Querdraht 4 mit. Beispielhaft sei angeführt, daß bei einer Produktionsgeschwindigkeit von etwa 0,35 bis 0,5 m/s die Länge dieser kurzen Strecke etwa 5 mm beträgt. Anschließend kehren die Greiffinger 11 entlang eines Teilstückes einer elliptischen Kurvenbahn wieder nach hinten und oben bzw. unten in ihre Ausgangs-Greifstellung zurück, um dort den in der nächsten Rille 8 liegenden nächsten Querdraht 4 abzugreifen.

Unmittelbar nach dem Aufsetzen des Querdrahtes 4 an den Längsdrähten fahren von oben kommende Elektroden 12 mit ihren Schweißflächen an die Kreuzungsstellen des Drahtgitters, welche auf den Schweißflächen der unteren Gegenelektroden 13 aufliegen. Die zusammenwirkenden Schweißflächen werden so lange unter Zwischenanordnung der Kreuzungsstellen des Gitters gegeneinander gepreßt, bis die Schweißung nach Ablauf der schweißtechnisch erforderlichen Schweißzeit durchgeführt ist. Für eine hinreichend, den Anforderungen entsprechende feste Schweißung ist bei einer Produktionsgeschwindigkeit von beispielhaft 0,35 bis 0,5 m/s ein Mitfahrweg der Elektroden 12 und Gegenelektroden 13 von max. ca. 80 mm erforderlich.

Die Elektroden 12 und Gegenelektroden 13 sind an einem innenliegenden Rahmen 14 (oder auch Wagen) angeordnet, der am ortsfesten äußeren Rahmen 1 gelagert und gegenüber diesem periodisch horizontal hin- und herverfahrbar ist, wobei die Verfahrstrecke den beispielhaft genannten 80 mm entspricht. Der innenliegende, verfahrbare Rahmen 14 ist ausgeführt in Form eines Wagens, welcher mittels Rollen 16 eine Führung 17 des äußeren Rahmens 1 entlang fahrbar ist. Der Antrieb des Rahmens 14 erfolgt mittels eines motorgetriebenen Antriebsritzels 18, welches am äußeren Rahmen 1 gelagert ist und in eine am Rahmen 14 befestigte Zahnstange 19 eingreift.

Für das Auf- und Abbewegen der Elektroden 12 sind diese am Innenliegenden Rahmen 14 vertikal geführt und mittels eines Verstellantriebes, z.B. in Form hydraulischer oder pneumatischer Zylinder-Kolben-Einrichtungen 20, verfahrbar.

Die Greiffinger 11 sind nach dem in der AT-B-515 914 der Anmelderin ausführlich veröffentlichten Prinzip ausgebildet, so daß an dieser Stelle auf eine Detaildarstellung verzichtet werden kann. Eine der Anzahl der Längsdrähte entsprechende Zahl von Greiffingern 11, die an ihrem Arbeitsende einen V-förmigen Einschnitt zum Abgreifen des Querdrahtes 4 aufweisen, ist am anderen Ende an einem quer zu den Längsdrähten oberhalb bzw. unterhalb derselben angeordneten horizontalen Arbeitsbalken befestigt. Der Arbeitsbalken ist mittels eines Hebelsystems bewegbar, das an einem Festpunkt angelenkt ist und zwei Exzenter aufweist, wovon ein Exzenter eine Horizontalbewegung und der andere Exzenter eine Vertikalbewegung herbeiführt. Ein weiteres Hebelsystem ermöglicht das federnde Anpressen des von den Greiffingern 11 gegen die Längsdrähte gepreßten Querdrahtes 4 entlang des kurzen Weges des Mitbewegens der Greiffinger 11 mit den Kreuzungsstellen des Gitters, bis dann die Schweißflächen der Elektroden 12 auf die Kreuzungsstellen auftreffen und diese gegen Gegenelektroden 13 pressen und die Kreuzungsstellen zusammenhalten. Das federnde Anpressen ermöglicht das Anpassen an verschiedene Dicken der Querdrähte 4.

Der Anpreßdruck der Elektroden 121 kann konstant über den gesamten Schweißzyklus gehalten werden oder in Abhängigkeit des zu verschweißenden Materials auch einem vorbestimmten Profil folgen. Ein solches Profil kann die drei Stufen mit jeweils unterschiedlichem Anpreßdruck "Vorpressen ohne Strom", "Schweißung" und "Nachpressen" beinhalten.

Die Hebelsysteme führen zu einer in sich geschlossenen Bahn der Greiffinger 11 entlang einer wie oben beschriebenen Kurvenbahn.

Die Zeichnung zeigt im Übrigen am äußeren Rahmen 1 befestigte ortsfeste Schweißtransformatoren 22, die mittels flexibler Strombänder 23 und einer am Rahmen 14 befestigten Strombrücke 24 mit den Gegenelektroden 13 bzw. den Elektroden 12 verbunden sind.

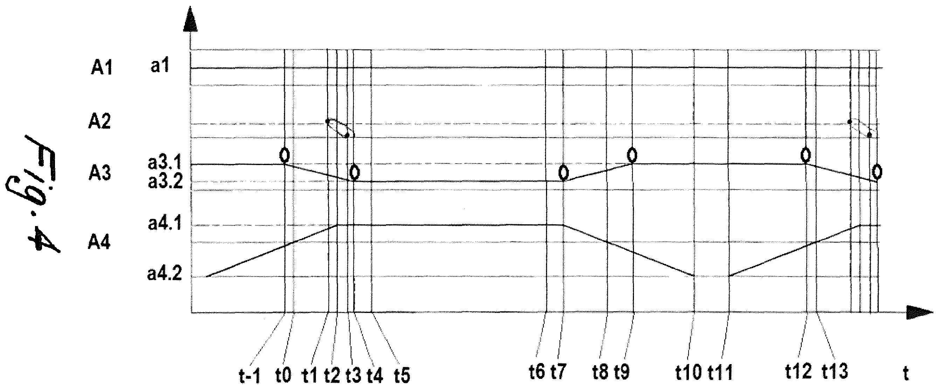

Die Fig. 4 - 6 vereinigen jeweilige Teildiagramme für die verschiedenen bewegten Komponenten A1 bis A4 der erfindungsgemäßen Schweißmaschine über einer gemeinsamen x-Achse, auf der die Zeit umfassend einen Schweißzyklus aufgetragen ist. Damit wird das Zusammenwirken der Bewegungen der verschiedenen Komponenten A1 - A4 gezeigt; A1 bezieht sich auf die Vorschubeinrichtung für das Drahtgitter bzw. dessen Längsdrähte, A2 auf die Greiffinger 11, A3 auf die Vertikalbewegung der oberen Schweißelektroden 12 und A4 auf deren und der unteren Gegenelektroden 13 Horizontalbewegung durch Hin- und Herverfahren des Rahmens 14.

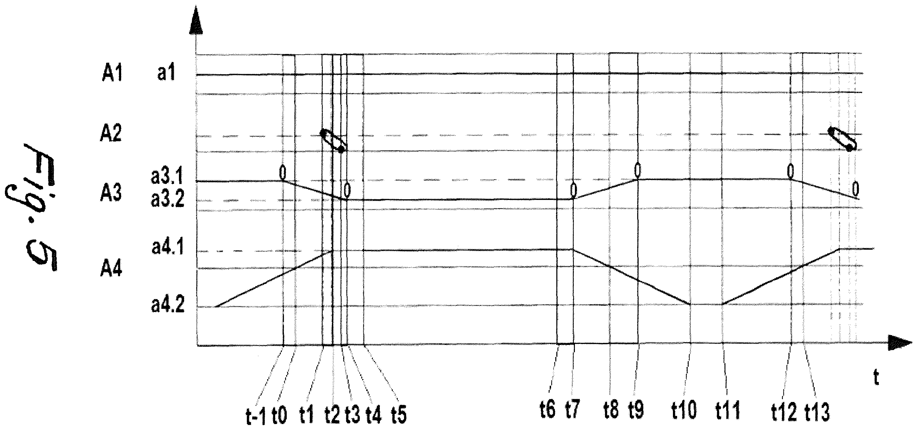

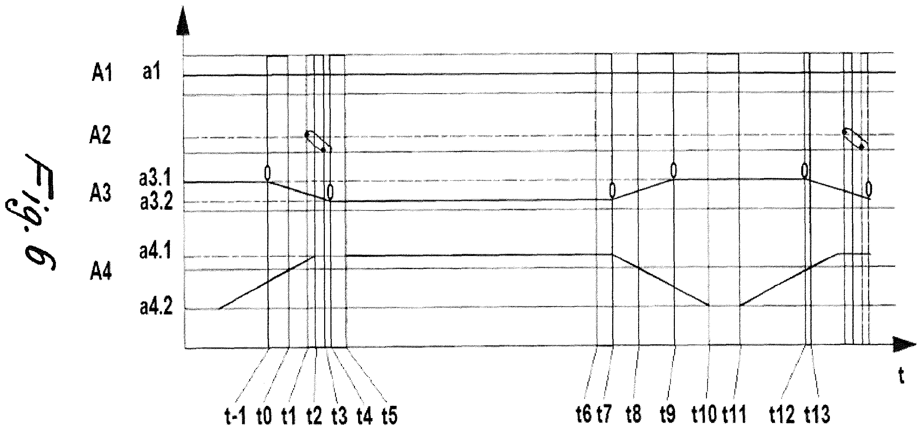

Die in den Fig. 4 - 6 gezeigten Arbeitsdiagramme beziehen sich auf die Herstellung eines Gitters mit einer Querdrahtteilung von 150 mm. Es unterscheiden sich die Produktionsgeschwindigkeiten (Fig. 4: 0,5 m/s; Fig. 5: 0,45 m/s; Fig. 6: 0,342 m/s), die Anzahl der pro Minute durchgeführten Schweißtakte (Fig. 4: 200; Fig. 5: 190; Fig. 6: 180) und die Anzahl der pro Schweißtakt benötigten Wechselstromperioden (Fig. 4: 5; Fig. 5: 6; Fig. 6: 8).

Im Teildiagramm A1 ist auf der y-Achse die Geschwindigkeit der Vorschubeinrichtung für das Gitter aufgetragen und deren konstante Größe a1 ersichtlich.

Im Teildiagramm A2 ist auf der y-Achse der Vertikalweg der Greiffinger 11 beim Zubringen des Querdrahtes 4 von der Trommel 7 auf die Schar der Längsdrähte aufgetragen. Die Bewegung der Greiffinger 11 beginnt zum Zeitpunkt t1, worauf der Querdraht 4 nach Durchlaufen einer ersten Teilstrecke einer etwa elliptischen Kurvenbahn zum Zeitpunkt t3 die Schar der Längsdrähte erreicht. Hierauf fahren die Greiffinger 11 kurzzeitig bis zum Zeitpunkt t4 synchron mit dem Gitter mit und heben bei t4 wieder von diesem ab und bewegen sich sodänn weiter entlang der etwa elliptischen Kurvenbahn, bis sie zur bei t1 eingenommenen früheren Position wieder zurückkehren.

Im Teildiagramm A3 ist auf der y-Achse der Vertikalweg der oberen Schweißelektroden 12 mittels der Zylinder-Kolbeneinrichtungen 20 aufgetragen. Ausgehend von der zum Zeitpunkt t-1 eingenommenen Offenstellung a3.1 folgt eine Beschleunigung bis zum Zeitpunkt t2, wo die Gittergeschwindigkeit erreicht wird; zum Zeitpunkt t4 kommen die Schweißelektroden in der geschlossenen Stellung a3.2 unten an und halten den Querdraht 4 auf den Längsdrähten fest; zum Zeitpunkt t4 beginnt auch das Vorpressen der Kreuzungsstellen kurz vor dem zum Zeitpunkt t5 beginnenden Schweißvorgang. Vom Zeitpunkt t5 bis zum nachfolgenden Zeitpunkt t6 dauert der Schweißvorgang. Daran schließt sich ein kurzes Nachpressen der Schweißelektroden 12 bis zum Zeitpunkt t7 an; die Schweißelektroden 12 sind im Zeitraum t4 - t7 synchron mit dem Gitter mitgefahren; zum Zeitpunkt t7 heben außerdem die Schweißelektroden 12 von den Kreuzungsstellen nach oben ab und erreichen zum Zeitpunkt t9 wieder ihre Ausgangsstellung des Zeitpunktes t-1. Ab dem Zeitpunkt t12 beginnen die Schweißelektroden 12 wieder nach unten zu fahren.

Im Teildiagramm A4 ist auf der y-Achse die Geschwindigkeit des horizontalen Hin- und Herfahrens des die oberen Schweißelektroden 12 und die unteren Gegenelektroden 13 tragenden Rahmens 14 eingetragen. Dessen maximale Geschwindigkeit in der Produktionsrichtung 3 ist mit a4.1, die Maximalgeschwindigkeit in der Gegenrichtung mit a4.2 bezeichnet. Man sieht, daß ab dem Zeitpunkt t7 die Geschwindigkeit des Rahmens 14 verzögert wird bis zum Erreichen des Umkehrpunktes zum Zeitpunkt t8 und dann in der Gegenrichtung wieder beschleunigt wird bis zum Zeit punkt t10, zu dem die maximale Rückfahrtgeschwindigkeit erreicht ist. Zum Zeitpunkt t11 beginnt die Verzögerung der Rückfahrt des Rahmens 14, der ab dem Zeitpunkt t13 wieder in der Produktionsrichtung 3 fährt.

Der in den Fig. 4 - 6 dargestellte Schweißzyklus dauert von t0 bis t13.

## Patentansprüche

1. Nach der elektrischen Widerstandsmethode kontinuierlich arbeitende Gitterschweißmaschine mit einem stationären äußeren Längsrahmen (1), auf welchem aufliegend eine horizontale Schar paralleler Längsdrähte mittels einer Vorschubeinrichtung kontinuierlich in Produktionsrichtung (3) bewegbar ist, sowie mit einer Abziehvorrichtung (6), mittels welcher die Querdrähte (4) von einer Spule oder Ringen (5) abziehbar und einer quer zur Schar der Längsdrähte verlaufenden Übergabeeinrichtung zuführbar sind, in welcher mehrere Querdrähte (4) aufnehmbar und von dort hintereinander der Reihe nach an die Längsdrähte heranführbar und an diesen der Teilung der Querdrähte entsprechend und lagegerecht in Anlage bringbar und dort abgebbar sind, sowie mit Elektroden (12) und Gegenelektroden (13), deren Schweißflächen unter Zwischenanordnung der zwischen den Längsdrähten und den Querdrähten (4) gebildeten Kreuzungsstellen gegeneinander preßbar sind, wobei sowohl die oberen Elektroden (12) als auch die unteren Gegenelektroden (13) an einem am stationären Rahmen (1) gelagerten und gegenüber diesem periodisch in der Längsrichtung horizontal hin- und herverfahrbaren inneren Rahmen (14) angeordnet sind und die oberen Elektroden (12) an dem verfahrbaren Rahmen (14) von einer oberen Stellung nach unten auf die auf den unteren Gegenelektroden (13) aufliegenden Kreuzungsstellen hin bewegbar gelagert sind, wobei sie in Anlage an den Kreuzungsstellen eine untere erste Stellung des beginnenden Schweißens erreichen und dann durch Verfahren des Rahmens (14) in der Längsrichtung gemeinsam mit den unteren Gegenelektroden (13) bei aufrechterhaltenem Anpreßdruck synchron mit dem Gitter bis in eine zweite auf demselben Höhenniveau liegende in Flußrichtung hintere Stellung des endenden Schweißens mitfahren und dann durch Zurückfahren des inneren Rahmens (14) die Elektroden (12) und die Gegenelektroden (13) wieder ihre frühere Lage in bezug auf die Längsrichtung erreichen, während die oberen Elektroden (12) zuerst wieder lotrecht nach oben und schließlich nach unten in die frühere untere erste Stellung des beginnenden Schweißens am bzw. an den darauffolgenden Querdrähten (4) bewegbar sind, wobei die Querdrähte (4) an die Schar der Längsdrähte mittels Greiffingern (11) lagerecht in Anlage bringbar sind, **dadurch gekennzeichnet, daß** die für jede der Schweißstellen vorgesehenen Greiffinger (11) an die mehrere von der Abziehvorrichtung (6) angekommenen Querdrähte (4) aufnehmende Übergabeeinrichtung zur Aufnahme der Querdrähte (4) fahrbar und dann mitsamt einem aufgenommenen Querdraht (4) an die Kreuzungsstellen heranfahrbar sind, bis der Querdraht (4) zu einem Zeitpunkt unmittelbar vor den oberen Elektroden (12) auf die Kreuzungsstellen auftrifft und die Greiffinger (11) dann mittels des verfahrbaren Rahmens (14) zuerst allein vor Beginn des Schweißens ein erstes Teilstück und dann gemeinsam mit den Elektroden (12) und Gegenelektroden (13) ein weiteres Teilstück des von ihnen synchron mit den Längsdrähten des zu bildenden Gitters gefahrenen horizontalen Weges fahren, worauf das synchrone Fahren der Elektroden (12) und Gegenelektroden (13) bis zum fertigen Schweißen fortsetzbar ist.

2. Gitterschweißmaschine nach Anspruch 1, **dadurch gekennzeichnet, daß** die mehrere von der Abziehvorrichtung (6) ankommenden Querdrähte (4) aufnehmende Übergabeeinrichtung als quer zur Schar der Längsdrähte über bzw. unter dieser verlaufende Trommel (7) ausgebildet ist, welche an ihrer Oberfläche in Längsrichtung verlaufende Rillen (8) aufweist, in welchen Rillen (8) nach jeweiligem Drehen der Trommel (7) mehrere Querdrähte (4) aufnehmbar und von dort der Reihe nach mittels der Greiffinger (11) abgreifbar sind.

3. Gitterschweißmaschine nach einem der Ansprüche 1 oder 2, **dadurch gekennzeichnet, daß** die Spulen (5), die Abziehvorrichtungen (6), die Trommeln (7), die Greiffinger (11) und die für das Schweißen nach der elektrischen Widerstandsmethode nötigen Schweißtransformatoren (22) an dem stationären äußeren Rahmen (1) gelagert sind.

4. Gitterschweißmaschine nach einem der Ansprüche 1 bis 3, **dadurch gekennzeichnet, daß** für die Stromzufuhr von den stationären Transformatoren (22) zu den Elektroden (12) und Gegenelektroden (13) vorgesehene Stromzuführungseinrichtungen (24) über einen bis zum verfahrbaren Rahmen (14) reichenden Teilbereich als flexible Strombänder oder Stromkabel (23) ausgebildet sind.

5. Gitterschweißmaschine nach einem der Ansprüche 1 bis 4, **dadurch gekennzeichnet, daß** der Verfahrweg des in der Längsrichtung hin- und herverfahrbaren Rahmens (14) gleich dem gemeinsamen horizontalen Verfahrweg der oberen Elektroden (12) und der unteren Gegenelektroden (13) während des Schweißens ist und in etwa 30 bis max. 80 mm lang ist.

6. Gitterschweißmaschine nach Anspruch 1, **dadurch gekennzeichnet, daß** das erste Teilstück des von den Elektroden (12) und Gegenelektroden (13) gemeinsam während des Schweißens zurückgelegten horizontalen Verfahrweges, welches Teilstück die Greiffinger (11) ebenso synchron mit den Kreuzungsstellen zurücklegen, ca. 3 bis 10 mm lang ist.

7. Gitterschweißmaschine nach einem der Ansprüche 5 oder 6, **dadurch gekennzeichnet, daß** bei einer Produktionsgeschwindigkeit des Gitters von etwa 0,35 bis 0,5 m/s die kurze Mitfahrstrecke der Greiffinger (11) etwa 5 mm und die weitere Mitfahrstrecke der Elektroden (12) und Gegenelektroden (13) etwa 80 mm lang ist.

8. Gitterschweißmaschine nach Anspruch 2, **dadurch gekennzeichnet, daß** die in den Rillen (8) der Trommeln (7) befindlichen Querdrähte (4) vor dem mittels der Greiffinger (11) erfolgenden Abgreifen mittels schwenkbarer Klappen (10) am Herausfallen aus der jeweiligen Rille (8) gehindert sind.

9. Gitterschweißmaschine nach einem der Ansprüche 1 bis 8, **dadurch gekennzeichnet, daß** die Horizontalbewegung des verfahrbaren Rahmens (14) mittels eines motorangetriebenen Ritzels (18) erfolgt, welches in eine am verfahrbaren Rahmen (14) befestigte Zahnstange (19) greift.

10. Gitterschweißmaschine nach einem der Ansprüche 1 bis 9, **dadurch gekennzeichnet, daß** für das Auf- und Abbewegen der Elektroden (12) am horizontal verfahrbaren Rahmen (14) an diesem hydraulische oder pneumatische Zylinder-Kolben-Einrichtungen (20) angeordnet ist.

## Claims

1. Mesh welding machine operating continuously according to the electrical resistance principle, comprising a stationary outer longitudinal frame (1), on which, in a manner resting thereon, a horizontal set of parallel longitudinal wires can be moved continuously in a production direction (3) by means of a feeding device, and comprising a removal apparatus (6), by means of which cross wires (4) can be removed from a coil or rings (5) and fed to a transfer device extending transversely to the set of longitudinal wires, in which transfer device a plurality of cross wires (4) can be received and, from there, can be conveyed one after another in turn towards the longitudinal wires and brought into contact with said longitudinal wires in a correct orientation according to the pitch of the cross wires and can be set down there, and comprising electrodes (12) and counter electrodes (13), the weld surfaces of which can be pressed against one another so as to have points of intersection therebetween, which points of intersection are formed between the longitudinal wires and the cross wires (4), both the upper electrodes (12) and the lower counter electrodes (13) being arranged on an inner frame (14) which is mounted on the stationary frame (1) and is movable back and forth periodically in the longitudinal direction relative to said stationary frame, and the upper electrodes (12) being mounted on the movable frame (14) so as to be able to move from an upper position downwards onto the points of intersection that rest on the lower counter electrodes (13), said upper electrodes reaching a lower first position of the start of the welding process so as to be in contact with the points of intersection and then, by moving the frame (14) in the longitudinal direction together with the lower counter electrodes (13) while maintaining contact pressure, traveling synchronously with the mesh into a second position of the end of the welding process, which second position is at the same height level and located downstream with respect to a direction of flow, and then, by moving the inner frame (14) back, the electrodes (12) and the counter electrodes (13) returning to their earlier positions with respect to the longitudinal direction, while the upper electrodes (12) can be moved first vertically upwards again and then downwards into the earlier, lower first position of the start of the welding process on the following cross wire(s) (4), it being possible to bring the cross wires (4) into contact with the set of longitudinal wires in the correct orientation by means of gripping fingers (11), **characterised in that** the gripping fingers (11) provided for each of the weld points can travel to the transfer device which is intended for receiving the cross wires (4) and receives a plurality of cross wires (4) arriving from the removal apparatus (6), and said fingers then can be moved together with a received cross wire (4) towards the points of intersection until the cross wire (4) contacts the points of intersection at a time immediately before the upper electrodes (12), and the gripping fingers (11) then travel, by means of the movable frame (14), first alone along a first section before welding begins and then together with the electrodes (12) and the counter electrodes (13) along another section of the horizontal path travelled by said electrodes synchronously with the longitudinal wires of the mesh to be formed, whereupon the synchronous travel of the electrodes (12) and the counter electrodes (13) can be continued until welding is completed.

2. Mesh welding machine according to claim 1, **characterised in that** the transfer device receiving a plurality of cross wires (4) arriving from the removal apparatus (6) is in the form of a drum (7) that extends transversely to the set of longitudinal wires above or below said wires, which drum has, on its surface, grooves (8) extending in the longitudinal direction, in which grooves (8), after each rotation of the drum (7), a plurality of cross wires (4) can be received and, from there, picked off said drum one by one by means of the gripping fingers (11).

3. Mesh welding machine according to either claim 1 or claim 2, **characterised in that** the coils (5), the removal apparatuses (6), the drums (7), the gripping fingers (11) and the welding transformers (22), which transformers are necessary for welding according to the electrical resistance principle, are mounted on the stationary outer frame (1).

4. Mesh welding machine according to any of claims 1 to 3, **characterised in that** power supply devices (24) provided for supplying power from the stationary transformers (22) to the electrodes (12) and the counter electrodes (13) are in the form of flexible conductor lines or power cables (23) across a portion extending as far as the movable frame (14).

5. Mesh welding machine according to any of claims 1 to 4, **characterised in that** the movement path of the frame (14) which can be moved back and forth in the longitudinal direction is the same as the common horizontal movement path of the upper electrodes (12) and the lower counter electrodes (13) during the welding process and is approximately 30 to at most 80 mm long.

6. Mesh welding machine according to claim 1, **characterised in that** the first section of the horizontal movement path covered jointly by the electrodes (12) and the counter electrodes (13) during the welding process, which section is covered by the gripping fingers (11), also synchronously with the points of intersection, is approximately 3 to 10 mm long.

7. Mesh welding machine according to either claim 5 or claim 6, **characterised in that**, at a production speed of the mesh of approximately 0.35 to 0.5 m/s, the short common travel distance of the gripping fingers (11) is approximately 5 mm and the further common travel distance of the electrodes (12) and the counter electrodes (13) is approximately 80 mm long.

8. Mesh welding machine according to claim 2, **characterised in that** the cross wires (4) located in the grooves (8) in the drums (7), before being picked off by means of the gripping fingers (11), are prevented from falling out of the particular groove (8) by means of pivotable flaps (10).

9. Mesh welding machine according to any of claims 1 to 8, **characterised in that** the horizontal movement of the movable frame (14) is carried out by means of a motor-driven pinion (18) which engages in a rack (19) fastened to the movable frame (14).

10. Mesh welding machine according to any of claims 1 to 9, **characterised in that** hydraulic or pneumatic cylinder-piston devices (20) are arranged on the horizontally movable frame (14) in order to move the electrodes (12) up and down said frame.

## Revendications

1. Soudeuse de treillis fonctionnant en continu selon le procédé de soudage par résistance électrique, comprenant un châssis longitudinal extérieur fixe (1) sur lequel un ensemble horizontal de fils métalliques longitudinaux parallèles est mobile en continu en appui dans le sens de production (3) au moyen d'un dispositif d'avance, ainsi qu'un dispositif de dévidage (6) permettant de dévider les fils métalliques transversaux (4) d'une bobine ou d'anneaux (5) et de les amener à un dispositif de transfert s'étendant transversalement à l'ensemble des fils métalliques longitudinaux et dans lequel plusieurs fils métalliques transversaux (4) peuvent être reçus, et de là rapprochés l'un après l'autre, dans l'ordre, des fils métalliques longitudinaux, puis peuvent être mis en contact avec ceux-ci selon le pas des fils transversaux et un positionnement précis et peuvent y être libérés, ainsi que des électrodes (12) et des contre-électrodes (13) dont les surfaces de soudage peuvent être pressées les unes contre les autres avec interposition des points d'intersection formés entre les fils métalliques longitudinaux et les fils métalliques transversaux (4), dans laquelle, à la fois les électrodes supérieures (12) et les contre-électrodes inférieures (13) sont disposées sur un châssis intérieur (14) logé sur le châssis fixe (1) et pouvant être déplacé périodiquement en va-et-vient horizontal par rapport à celui-ci dans la direction longitudinale, et les électrodes supérieures (12) sont logées sur le châssis déplaçable (14) en pouvant être déplacées depuis une position supérieure vers le bas en direction des points d'intersection reposant sur les contre-électrodes inférieures (13), et atteignent en contact avec les points d'intersection une première position inférieure de début de soudage, et puis, par le déplacement du châssis (14) dans la direction longitudinale, elles accompagnent les contre-électrodes inférieures (13), à pression de placage maintenue, en synchronisme avec le treillis jusqu'à une deuxième position arrière de fin de soudage, située au même niveau dans le sens de défilement, et ensuite, par un retour du châssis intérieur (14), les électrodes (12) et les contre-électrodes (13) atteignent de nouveau leur position antérieure par rapport à la direction longitudinale, alors que les électrodes supérieures (12) peuvent d'abord de nouveau être déplacées perpendiculairement vers le haut et ensuite vers le bas jusqu'à la première position inférieure antérieure de début de soudage au niveau d'un ou de plusieurs fils métalliques transversaux (4) consécutifs, dans laquelle les fils métalliques transversaux (4) peuvent être mis en contact avec l'ensemble des fils métalliques longitudinaux au moyen de doigts de préhension (11) selon un positionnement précis, **caractérisée en ce que** les doigts de préhension (11) prévus pour chacune des soudures peuvent être poussés jusqu'au dispositif de transfert recevant plusieurs fils métalliques transversaux (4) provenant du dispositif de dévidage (6) pour recevoir les fils métalliques transversaux (4), et peuvent ensuite avec un fil de fer transversal (4) reçu être rapprochés des points d'intersection jusqu'à ce que le fil de fer transversal (4) rencontre les points d'intersection à un instant immédiatement avant les électrodes supérieures (12), et les doigts de préhension (11) parcourent ensuite au moyen du châssis déplaçable (14) d'abord seuls avant le début du soudage une première section et ensuite avec les électrodes (12) et les contre-électrodes (13) une section supplémentaire du trajet horizontal qu'elles parcourent en synchronisme avec les fils métalliques longitudinaux du treillis à créer, la marche synchrone des électrodes (12) et des contre-électrodes (13) pouvant ensuite continuer jusqu'à l'achèvement du soudage.

2. Soudeuse de treillis selon la revendication 1, **caractérisée en ce que** le dispositif de transfert recevant plusieurs fils métalliques transversaux (4) provenant du dispositif de dévidage (6) est réalisé sous la forme d'un tambour (7) s'étendant transversalement à l'ensemble des fils métalliques longitudinaux au-dessus ou au-dessous de celui-ci et présentant des rainures (8) s'étendant à sa surface dans la direction longitudinale, rainures (8) dans lesquelles, après une rotation respective du tambour (7), plusieurs fils métalliques transversaux (4) peuvent être reçus et peuvent y être prélevés dans l'ordre au moyen des doigts de préhension (11).

3. Soudeuse de treillis selon l'une quelconque des revendications 1 et 2, **caractérisée en ce que** les bobines (5), les dispositifs de dévidage (6), les tambours (7), les doigts de préhension (11) et les transformateurs de soudage (22) nécessaires au soudage selon le procédé de soudage par résistance électrique sont montés sur le châssis extérieur fixe (1).

4. Soudeuse de treillis selon l'une quelconque des revendications 1 à 3, **caractérisée en ce que** des dispositifs d'alimentation en courant (24) prévus pour l'alimentation en courant des transformateurs fixes (22) aux électrodes (12) et aux contre-électrodes (13) sont réalisés sous la forme de tresses flexibles ou de câbles électriques (23) passant par une zone partielle allant jusqu'au châssis déplaçable (14).

5. Soudeuse de treillis selon l'une quelconque des revendications 1 à 4, **caractérisée en ce que** le trajet de déplacement du châssis (14) déplaçable en va-et-vient dans la direction longitudinale est égal au trajet de déplacement horizontal commun des électrodes supérieures (12) et des contre-électrodes inférieures (13) pendant le soudage et mesure entre environ 30 et 80 mm au maximum.

6. Soudeuse de treillis selon la revendication 1, **caractérisée en ce que** la première section du trajet de déplacement horizontal parcouru en commun par les électrodes (12) et les contre-électrodes (13) pendant le soudage mesure entre environ 3 et 10 mm, ladite section étant également parcourue par les doigts de préhension (11) en synchronisme avec les points d'intersection.

7. Soudeuse de treillis selon l'une quelconque des revendications 5 et 6, **caractérisée en ce qu'**avec une vitesse de production du treillis comprise entre environ 0,35 et 0,5 m/s, le court trajet d'accompagnement des doigts de préhension (11) mesure environ 5 mm, et le reste du trajet d'accompagnement des électrodes (12) et des contre-électrodes (13) mesure environ 80 mm.

8. Soudeuse de treillis selon la revendication 2, **caractérisée en ce que** les fils métalliques transversaux (4) qui se trouvent dans les rainures (8) des tambours (7) sont empêchés de tomber de la rainure (8) respective au moyen de volets pivotants (10) avant le prélèvement effectué au moyen des doigts de préhension (11).

9. Soudeuse de treillis selon l'une quelconque des revendications 1 à 8, **caractérisée en ce que** le mouvement horizontal du châssis déplaçable (14) est effectué au moyen d'un pignon motorisé (18) qui vient en prise avec une crémaillère (19) fixée au châssis déplaçable (14).

10. Soudeuse de treillis selon l'une quelconque des revendications 1 à 9, **caractérisée en ce que** des dispositifs à cylindre et à piston (20) hydrauliques ou pneumatiques sont disposés sur le châssis déplaçable horizontal (14) pour monter et descendre les électrodes (12) sur le châssis déplaçable horizontal (14).
